# EUROPÄISCHE PATENTSCHRIFT

(11) **EP 0 897 108 B1**
(45) Veröffentlichungstag und Bekanntmachung des Hinweises auf die Patenterteilung: **17.08.2005**
(21) Anmeldenummer: 98111821.9
(22) Anmeldetag: 26.06.1998
(51) Int. Cl.: G01N 1/00

(54) **Verfahren und Vorrichtung zum analytischen Nachweis von Spuren**
Method and apparatus for analytic detection of traces
Dispositif et procede de detection analytique des traces

(30) Priorität: 11.08.1997 DE 19734460
(43) Veröffentlichungstag der Anmeldung: 17.02.1999
(73) Patentinhaber: GSF-Forschungszentrum für Umwelt und Gesundheit GmbH, 85764 Neuherberg (DE)
(72) Erfinder: Tröster, Klaus, 86165 Augsburg (DE); Holzapfel, Winfried, Dr., 83052 Bruckmühl (DE); Kettrup, Antonius, Prof. Dr., 59821 Arnsberg (DE)

(56) Entgegenhaltungen:
- GB-A- 2 299 445
- GB-A- 2 300 257
- US-A- 4 970 905
- US-A- 5 294 797
- US-A- 5 742 050
- POOLE C F ET AL: "Multidimensionality in planar chromatography" JOURNAL OF CHROMATOGRAPHY A, Bd. 703, Nr. 1, 26. Mai 1995, Seite 573-612 XP004023382
- GRIMM R ET AL: "Nanogram scale separations of proteins using capillary high -performance liquid chromatography with fully-automated on-line microfraction collection followed by matrix-assisted laser desorption ionisation time-of-flight mass spectrometry, protein sequencing and Western blot analysis" JOURNAL OF CHROMATOGRAPHY A, Bd. 800, Nr. 1, 20. März 1998, Seite 83-88 XP004112376

## Beschreibung

Die Erfindung betrifft ein Verfahren und eine Vorrichtung zum analytischen Nachweis von Spuren.

Aus M. J. Cohen et al.: Journal of Chromatographic Science, 1970, 8, 330- 337 ist ein Ionendriftspektrometer (IMS), gegebenenfalls gekoppelt mit einem Massenspektrometer als empfindliche Analysenmethode für bestimmte Organika bekannt. Ebenfalls bekannt ist aus Baim, M. A.; Eatherton, R. L.; Hill, H. H. Jr.; Anal. Chem. 1983, 55, 1761-1766 die Verwendung eines IMS-Gerätes als Detektor für einen Gaschromatographen (GC), wobei die Kapillare des GC-Gerätes mit dem IMS-Gerät verbunden wurde.

Da bei konventionellen IMS-Geräten bisher nicht darauf geachtet wurde, das Volumen und die Rückvermischung der Probenkammer möglichst gering zu halten, muß man beim herkömmlichen Probeneinlaß wesentlich mehr Substanz einsetzen als bei einer deutlich kleineren Probenkammer oder gar einer Kapillaren und muß länger warten, bis die Substanz wieder soweit aus dem Gerät gespült worden ist, bis man mit der nächsten Probe beginnen kann.

Aus der US 5.663.561 ist ein Verfahren zur Ionisierung schwerer Moleküle bei Atmosphärendruck bekannt, bei der Zersetzungsprodukte über eine Kapillare angesaugt werden.

Auch aus C.F Poole et al.: Journal of Chromography A, Bd. 703, Nr. 1 (26. Mai 1995), S.573 - 612 ist ein derartiges Verfahren zur Probennahme mit einer Kapillare bekannt

Aus der US 4.970.905 ist eine Vorrichtung und ein Verfahren zur Probennahme mit einem Kapillarensystem bekannt, bei dem eine Beprobung druckgesteuert durch Ansaugen erfolgt. Eine Rückvermischung wird durch ein protionsweises Weiterleiten durch eine Kapillare zu einem Auswertegerät vermieden.

Eine ortsaufgelöste Analyse ist mit keinem der Geräte möglich.

Aufgabe der Erfindung ist es, ein Verfahren und eine Vorrichtung zur ortsaufgelösten Spurenanalyse bereitzustellen.

Gelöst wird diese Aufgabe durch die Merkmale der Patentansprüche 1 und 7. Die Unteransprüche beschreiben vorteilhafte Ausgestaltungen der Erfindung.

Ersetzt man die konventionelle Probenkammer eines IMS-Gerätes mit ca. 10 ml durch eine kleinere mit ca. 3,5 ml bzw. eine 0,5 m lange Quarzglaskapillare mit etwa 0,1 ml, so reduziert man das Volumen, was zu einer deutlich geringeren Verdünnung und Rückvermischung der Probe führt. Unter dem Begriff "Rückvermischung" versteht man in der technischen Chemie die Vermischung einzelner Volumenelemente einer Reaktionsmischung in Strömungsrichtung, was physikalisch einer Diffusion sehr nahe kommt. Da die zu analysierende Substanzmenge durch die Verkleinerung der Probenkammer innerhalb einer wesentlich kürzeren Zeitspanne dem Ionenmolekülreaktor zugeführt wird, sinkt die Nachweisgrenze ab, während die erhaltenen Signale wesentlich schmäler und höher werden.

Umgeht man das Volumen der herkömmlichen Probenkammer mit einer Kapillare, so verringert man das Volumen des Einlaßsystems und somit auch die Verdünnung und Rückvermischung der zu analysierenden Substanz. Dadurch erhält man schmale Signale und geringe Nachweisgrenzen Dabei ist zu beachten, daß eventuelle Adsorptionen der transportierten Substanz an den inneren Oberflächen der Transporteinrichtung ebenfalls zu einer Art Rückvermischung führt und daher minimiert werden sollte.

Da bei den experimentellen Nachweisen die Substanzmenge, die die Kapillare aufgenommen hat, bisher nur grob geschätzt werden konnte, läßt sich die Steigerung der Empfindlichkeit nicht genau bestimmen. Das Gerät mit der Kapillaren ist mindestens um das 10- bis 100-fache empfindlicher.

Ein weiterer Vorteil besteht darin, daß das IMS-Gerät weiter miniaturisiert werden kann. Die Kapillare stellt auch eine sehr empfindliche "Nase" zur Überwachung der Raumluft im Bezug auf gefährliche Stoffe dar. Bei Mehrpunktmessungen ist es durch den Einsatz einer Kapillare möglich die Abfragerate zu erhöhen.

Die Erfindung wird im folgenden mit Hilfe der Figuren anhand eines Ausführungsbeispiels näher erläutert.

Dabei zeigt
die Fig. 1 den Einfluß des Transportvolumens auf den zeitlichen Verlauf des Detektorsignals.
Die Fig. 2 zeigt den schematischen Aufbau einer gesamten Vorrichtung zur Spurenanalyse und
die Fig. 3 zeigt ein Laserdesorptionsmodul.

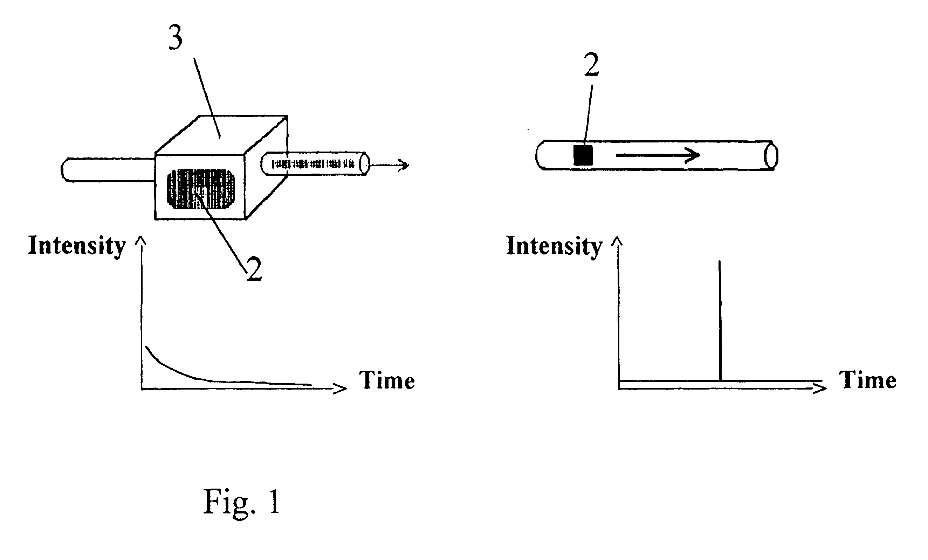

Die Fig. 1 zeigt oben links eine Transportleitung welche durch ein Transportvolumen aufgeweitet ist und daneben eine einfache Transportleitung. Darunter sind die entsprechenden zeitabhängigen Detektorsignale dargestellt.

Verwendet man ein großes Transportvolumen 3 in dem eine schnelle und nahezu vollständige Rückvermischung möglich ist, so wird die zu einem bestimmten Zeitpunkt eingebrachte Gasprobe 2 verdünnt. Dies führt dazu, daß das Detektorsignal bei einer geringen Amplitude beginnt und langsam abfällt. Bei der Transportleitung rechts oben zeigt das Detektorsignal nach einer Totzeit einen scharfen, hohen peak. Dadurch wird eine deutlich niedrigere Nachweisgrenze erreicht.

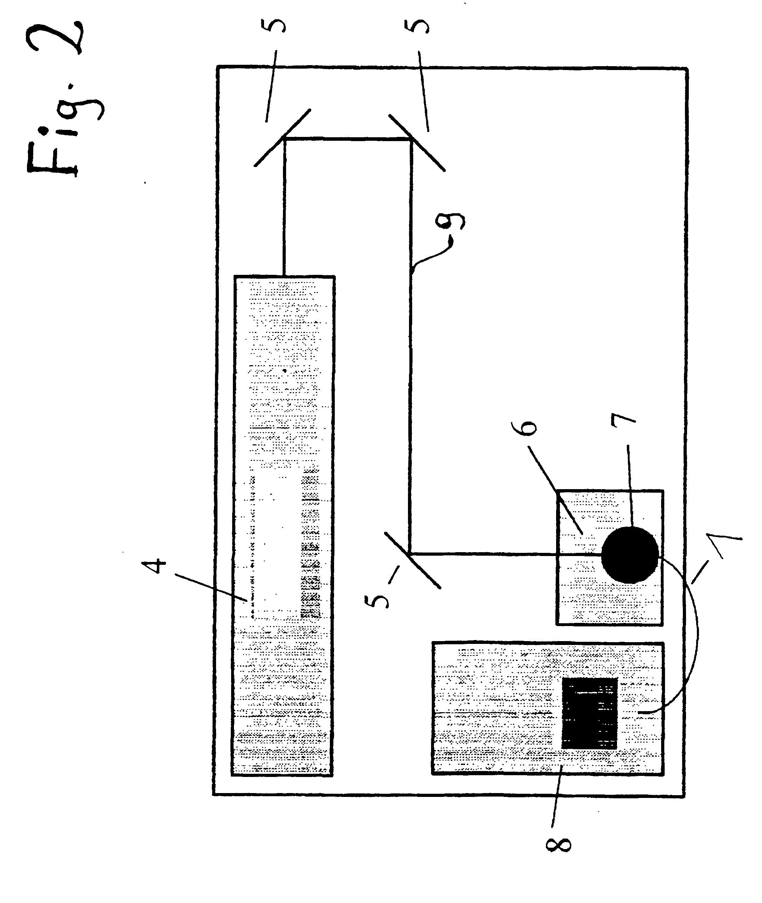

Beim Beispiel von Fig. 2 wird als Lichtquelle 4 ein Laser verwendet. Der Laserstrahl 9 wird über die Umlenkspiegel 5 in ein Mikroskop 6 eingekoppelt und auf die Probe 11 (hier nicht dargestellt) fokusiert. Die Probe 1 befindet sich in der Desorptionskammer 7. Die desorbierte Gasprobe 2 gelangt über die Kapillare 1 in das Nachweisgerät 8.

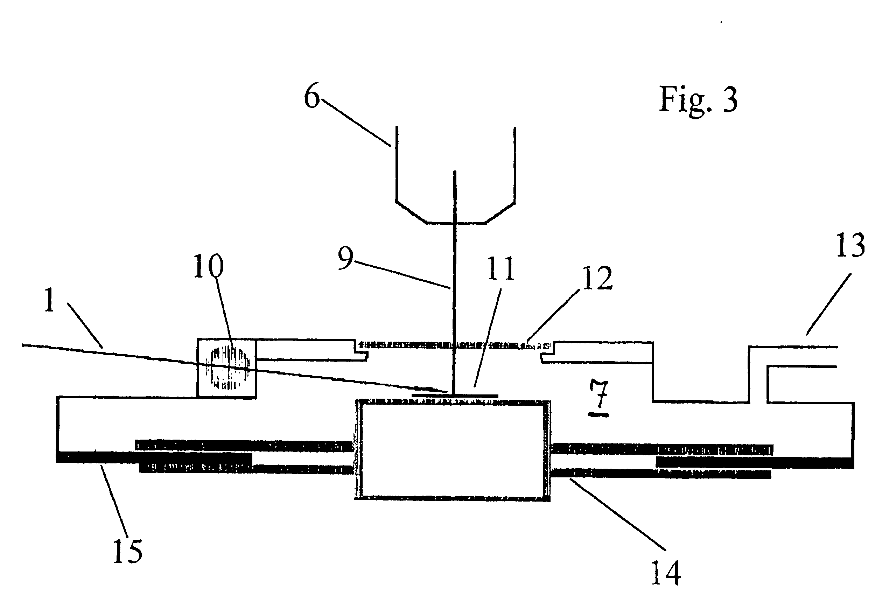

Zur ortsaufgelösten Analyse organischer Substanzen mit einem Ionendriftspektrometer ist es hilfreich, mit einer Laserdesorptionskammer zu arbeiten, die die zu untersuchende Probe von der Laborluft abschirmt, da ansonsten das Meßergebnis stark von den Verunreinigungen der Laborluft beeinträchtigt werden kann. Dazu dient die Desorptionskammer 7 in Fig. 3. Um jegliche Kontamination der Inertgasatmosphäre mit Organika zu vermeiden, verzichtet die Konstruktion der Laserdesorptionskammer vollkommen auf organische Schmiermittel oder Dichtmaterialien wie z.B. Silikone oder Gummi. Trotzdem kann die Probe mit Hilfe der Laserdesorptionskammer in einer beliebigen Inertgasatmosphäre so unter einem Mikroskopobjektiv positioniert werden, daß sich organische Verbindungen auf einer Fläche von ca. 50 µm² mit einem Laserstrahl bei Raumtemperatur desorbieren lassen. Zudem können die dabei freigesetzten organischen Moleküle mit der Kapillaren 1 aus der Laserdesorptionskammer 7 herausgeführt und zu einem Analysengerät wie z.B. dem IMS-Gerät transportiert werden.

Aus dem Mikroskop 6 tritt unten der Laserstrahl 9 aus geht durch das Fenster 12 und trifft auf die Probe 11. Von links wird eine Kapillare 1 durch eine Kapillardurchführung 10 in unmittelbare Nähe der Desorptionsstelle geführt. Die Kapillardurchführung 10 besteht aus einer zentrisch durchbohrten Kugel aus isolierendem Material, die formschlüssig auf der Kapillaren 1 sitzt. Die Dichtung der Kugel in der Desorptionskammer 7 wird durch einen Kugelschliff und einen Metallring oder Teflonring abgedichtet ohne die Beweglichkeit einzuschränken. Die Kapillare 1 ist aus Glas oder Quarz. Dabei hängt die Fähigkeit der Kapillare 1 die desorbierte Probe aufzunehmen entscheidend von ihrer Entfernung zur Desorptionsstelle ab. Daher sollte die Kapillare 1 so nah wie möglich an die Desorptionsstelle herangerückt werden, ohne den Laserstrahl 9 abzuschatten. Dabei sollte der Kapillardurchmesser größer sein als der Durchmesser des Laserspots auf der Probe. Als günstig hat sich ein Größenverhältnis von 7 zu 1 erwiesen. Bei zu großen Größenverhältnissen (größer als 15) sinkt die Nachweisempfindlichkeit. Sollen polare Substanzen nachgewiesen werden, kann deren Adsorption in der Kapillare sowohl durch Heizen als auch durch spezielle Desaktivierungen z.B. mit Silanen vermindert werden. Die Heizung der Kapillaren wird dadurch ermöglicht, daß die Glaskapillare von einem Metallrohr umgeben wird oder daß eine Metallkapillare innen mit Quarz beschichtet wird. Die Metallschicht wird in beiden Fällen über ihren Widerstand beheizt. Die Stromzuführungen sind hier nicht dargestellt.

Die Laserdesorptionskammer 7wird in einen Mikroskoptisch eingesetzt, der in x-, y- und z-Achse justierbar ist. Die Bewegung des Mikroskoptisches in x- und y-Richtung wird auf einen Probenschlitten 14 aus Messing übertragen, in dessen Zentrum ein nach unten herausnehmbarer Probenhalter (hier nicht eingezeichnet) sitzt. Somit läßt sich eine Probe auf dem Probenhalter gegenüber dem Oberteil der Desorptionskammer (aus Al) und dem Objektiv des Mikroskops bis auf einen µm genau positionieren. Dazu wird die Alu-Haube über 2 Haltestifte, einer Halteplatte und 2 Füßen mit dem Tisch verschraubt, auf den auch das Mikroskop montiert ist. Dadurch kann die Laserdesorptionskammer relativ zum Objektiv nur in z-Richtung bewegt werden, um den Fokus einzustellen. Um den Innenraum der Desorptionskammer 7 gegen die Laborluft abzudichten, wird der bewegliche Probenschlitten 14 mit zwei ringförmigen Platten an die rinförmige Schlittenführung 15 aus V2A gepreßt. Die untere ringförmige Platte des Probenschlittens 14 ist abnehmbar und so befestigt, daß das Spiel der geläppten Platten 10 bis 20 µm beträgt. Da Schmiermittel die Meßergebnisse stark beeinträchtigen können, müssen alle Spielpassungen so ausgelegt werden, daß sie auch ohne Schmierstoffe ausreichende Gleiteigenschaften aufweisen.

Auch die Spielpassung zwischen dem herausnehmbaren Probenhalter aus V2A und dem Messingschlitten kommt vollkommen ohne Schmierstoffe aus. Um verschieden dicke Proben untersuchen zu können ist der Probenhalter höhenverstellbar.

Der ins Mikroskop eingekoppelte Laserstrahl tritt durch eine Glasscheibe in die Laserdesorptionskammer, wo er die auf dem Probenhalter liegende Probe trifft. Bei Laserleistungsdichten von 1 - 3 MW/cm² werden eventuell vorhandene Organika durch die Energie des Laserstrahls meist unzerstört von der Probenoberfläche desorbiert. Das Fenster 12 wird ohne Abdichtung aus Gummi, Silikon oder Ähnlichem nur über Messinghalterungen mit einem Außengewinde in das Oberteil geschraubt. Dadurch erhält man zwar keine gasdichte Kammer, kann jedoch über den Gaseinlaß 13 und einen Gasstrom von 400 ml/min einen Überdruck von ca. 4 mbar in der Laserdesorptionskammer erzeugen, der das Eindringen von Laborluft weitgehend verhindert. Somit ist man in der Lage die Laserdesorption unabhängig von der Laborluft durchzuführen, indem man das Innere der Kammer mit einem beliebigen Gas spült. Darüber hinaus reicht der Innendruck aus, um die laserdesorbierte Substanz vermischt mit dem Gas im Innenraum mit einem Volumenstrom von ca. 4 ml/min über eine beheizte Leitung ins IMS-Gerät zu transportieren. Dabei ist ein möglichst großer Volumenstrom durch die Kapillare vorteilhaft. Dadurch wird die Zeit verkürzt in der die Gasprobe 2 mit der Kapillaren wechselwirkt. Zudem sinkt die Totzeit, die die Substanz für den Transport durch die Kapillare benötigt und es kann früher mit der bestrahlung und somit der desorption der naächsten Stelle begonnen werden.

Es bieten sich folgende Vorteile:

IMS-Spektren mit einer Ortsauflösung von ca. 50 µm² werden aussagekräftiger als ohne Laserdesorptionskammer.

Keine Störung der Messung durch Schmiermittel der Laserdesorptionskammer.

Keine Störung der Messung durch Ausgasungen aus Dichtmaterialien, wie z.B. Gummi oder Silikone.

Keine Störung der Messung durch die Laborluft in der Nähe der Desorptionsstelle.

Durch das Druckgefälle zwischen Laserdesorptionskammer und IMS-Gerät kann die desorbierte Substanz ins IMS-Gerät gedrückt werden, was wegen der undichten Driftzelle des IMS-Gerätes zu weniger Verunreinigungen im IMS-Spektrum führt, als das Ansaugen am Gasauslaß des IMS-Gerätes.

Durch das Druckgefälle zwischen Laserdesorptionskammer und IMS-Gerät kann die desorbierte Substanz in jedes Mesgerät gedrückt werden, wenn dies einen Vorteil bringt.

Laserdesorption in einem beliebigen Gas z.B. Inertgas wie Stickstoff oder Helium ist möglich. Innendruck und durch die beheizte Leitung zum IMS-Gerät gefördertes Volumen sind über die Durchflußmenge einstellbar.

Minimaler Abstand zwischen Objektiv und Probenhalter ist 6,8 mm, was für ein Objektiv mit extra großem Arbeitsabstand und 1000-facher Vergrößerung ausreicht.

Kombination der Ortsauflösung durch die Laserdesorption bei Raumtemperatur und Transport der desorbierten Moleküle bei erhöhter Temperatur, die für eine hohe Nachweisempfindlichkeit zwingend erforderlich ist, wird durch die Laserdesorptionskammer ermöglicht.

Von Vorteil ist die Kopplung eines Ionendriftspektrometers (IMS) bzw. Ionendriftspektrometers mit anschließendem Massenspektrographen (IMS/MS) als Detektor an eine Einheit, die mit Hilfe eines Lasers Substanzen einer Probenoberfläche ortsaufgelöst desorbiert und in das Analysengerät überführt.

Ohne die ortsaufgelöste Laserdesorption ergeben sich folgende Nachteile:

Die durch Auswahl eines bestimmten Stückes erzielte Ortsauflösung liegt im Quadratmillimeterbis Quadratzentimeterbereich und ist somit ziemlich schlecht. Außerdem ist es mit dieser Methode nicht möglich, daß man Verunreinigungen auf einer organischen Matrix wie z.B. einem Kunststoff nachweist, da die Ausgasungen aus einem Kunststoff, Harz, Kleber usw. aufgrund ihrer größeren Menge das Signal der Verunreinigung soweit überlagern, daß das Signal der Verunreinigung nicht mehr nachweisbar ist.

Beim Gegenstand der Erfindung wirkt auf die zu analysierende Oberfläche ein Laserstrahl ein, der sämtliche organischen Verbindungen auf einer Fläche von ca. 50 µm² desorbiert. Die so freigesetzten Moleküle werden von einem Transportmedium aufgenommen, in das IMS-Gerät als empfindlichen Detektor für bestimmte Organika transportiert und dort nachgewiesen. Es ist möglich die Zusammensetzung an verschiedenen Teilen einer Oberfläche zu ermitteln und so Aussagen über die Entstehung der Unterschiede zu treffen. Damit können z. B. die Ausfälle von elektronischen Bauteilen (auf Wafern) erklärt werden. Dadurch kann der Verfahrensprozess optimiert werden.

Zum Beweis der Funktionsfähigkeit der gesamten Apparatur wurde p-Methoxybenzoesäure mit dem Argonionenlaser bei λ = 488 nm und einer Laserleistungsdichte von 2 - 3 MW/cm² desorbiert. Die dabei verdampften neutralen Moleküle wurden von einer Transporteinheit, in diesem Fall einer beheizten Kapillare, aufgenommen und ins IMS-Gerät überführt, wo der Nachweis der eintreffenden Moleküle erfolgte. Während der Laserdesorption und noch einige Minuten danach wurden alle 7 Sekunden fortlaufend IMS-Spektren aufgenommen, um den zeitlichen Verlauf der Signalintensität der am IMS-Gerät eintreffenden Moleküle zu erfassen. Durch Messungen von p-Methoxybenzoesäure mit einem IMS/MS-Gerät konnte das bei der Laserdesorption beobachtete Signal mit K₀ = 1,76 cm²/(V*s) eindeutig auf das IMS-Signal des protonierten Molekülions (MH⁺) von p-Methoxybenzoesäure zurückgeführt werden, was beweist, daß diese Substanz bei der Laserdesorption nicht zerstört wird.

Man erreicht eine Ortsauflösung bis in den µm²-Bereich.

Man kann die Substanzen direkt von der Probenoberfläche desorbieren und in das Analysengerät überführen, ohne ein Lösemittel als Extraktionsmittel einzusetzen.

Man kann feste Proben ohne aufwendige Präparation direkt vermessen, was zu einem wesentlich größeren Probendurchsatz pro Zeiteinheit und damit zu einer Kostenersparnis führt.

Die Methode ist für die meisten Trägermaterialien, wie z.B. Wafer oder Metalle zerstörungsfrei.

Die Matrix, in der die zu analysierende Substanz sitzt, kann dadurch weitgehend ausgeblendet werden, daß nur eine auffällige Stelle mit dem Laser bestrahlt wird, während die umliegende Matrix kalt bleibt.

Es sind bereits vielfältige Möglichkeiten bekannt, eine feste, flüssige oder gasförmige Probe in die Trennsäule eines Gaschromatographen zu überführen. Dabei kann man bei Oberflächenuntersuchungen bisher dadurch eine Art Ortsauflösung erreichen, daß man nur ausgewählte Stellen abkratzt, diese mit Lösemitteln extrahiert und in die Säule injiziert oder bestimmte Stellen auf der Probenoberfläche direkt mit Lösemitteln extrahiert und anschließend die Extraktionslösung in den Gaschromatographen einspritzt. Die durch Abkratzen oder direktes Extrahieren erzielte Ortsauflösung liegt im Quadratmillimeter bis Quadratzentimeterbereich und ist somit ziemlich schlecht.

Außerdem ist das Verfahren davon abhängig, wie gut sich die einzelnen Substanzen mit dem verwendeten Lösemittel extrahieren lassen.

Bei der erfindungsgemäßen Kopplung von ortsaufgelöster Laserdesorption und GC wirkt auf die zu analysierende Oberfläche ein Laserstrahl ein, der sämtliche organischen Verbindungen auf einer Fläche von ca. 10 - 100 µm² desorbiert. Die so freigesetzten Moleküle werden von einer in unmittelbarer Nähe plazierten und beheizten Kapillare aufgenommen und in das Analysengerät transportiert.

Das ergibt folgende Vorteile:

Man erreicht eine Ortsauflösung bis in den µm²-Bereich.

Man kann die Substanzen direkt von der Probenoberfläche desorbieren und in das Analysengerät überführen, ohne ein Lösemittel als Extraktionsmittel einzusetzen.

Die Laserdesorption ist schneller als die Extraktion, was zu einem höheren Probendurchsatz je Zeiteinheit und somit zu einer Kostenersparnis führt.

Die Matrix, in der die zu analysierende Substanz sitzt, kann dadurch weitgehend ausgeblendet werden, daß nur eine auffällige Stelle mit dem Laser bestrahlt wird, während die umliegende Matrix kalt bleibt.

Da die Laserdesorption kaum zu Fragmentierung organischer Moleküle führt, können die bereits vorhandenen Bibliotheken zur Identifizierung einer Substanz weiter verwendet werden.

Da die Technologie der Gaschromatographen (GC) einen wesentlich höheren Entwicklungsstand und eine weitere Verbreitung aufweist als ein Ionendriftspektrometer, ist für einen kommerziellen Einsatz ein Gaschromatograph (GC) besser geeignet.

Neueste Entwicklungen zeigen, daß Gaschromatographen (GC) geringere Nachweisgrenzen aufweisen als ein Ionendriftspektrometer (IMS) und somit besser für den Einsatz als möglichst empfindlicher Detektor geeignet sind.

### Bezugszeichenliste:

- 1: Kapillare
- 2: Gasprobe
- 3: Transportvolumen
- 4: Lichtquelle
- 5: Spiegel
- 6: Mikroskop
- 7: Desorptionskammer
- 8: Nachweisgerät
- 9: Lichtstrahl
- 10: Kapillardurchführung
- 11: Probe
- 12: Glasfenster
- 13: Gaseinlaß
- 14: Probenschlitten
- 15: Schlittenführung

## Patentansprüche

1. Verfahren zum analytischen Nachweis von Spuren mit folgenden Verfahrensschritten:
a) Bestrahlen eines Teils einer Probenoberfläche mit Licht zum Ablösen der nachzuweisenden Spuren, wobei die Lichtleistungsdichte zwischen 1 und 100 MW/cm² liegt,
b) Aufnehmen und Weiterleiten der abgelösten organischen Verbindungen mit einer Kapillaren, wobei der Kapillarendurchmesser mindestens dreimal so groß ist wie der Durchmesser des bestrahlten Teils und
c) Zuführung des durch die Kapillare fließenden Gasstroms zum Eingang eines Nachweisgeräts (8) und Nachweis im Nachweisgerät (8),
**dadurch gekennzeichnet, dass**
d) die Probenoberfläche sich in einer Desorptionskammer (7) befindet,
e) in die Desorptionskammer die Kapillare ausmündet, wobei in der Desorptionskammer ein Innenraumdruck aufgebaut ist, wodurch die abgelösten organischen Verbindungen als Gasstrom durch die Kapillare zum Nachweisgerät transportiert werden.

2. Verfahren nach Anspruch 1, **dadurch gekennzeichnet, daß** als Kapillare eine beheizbare Kapillare verwendet wird.

3. Verfahren nach Anspruch 1 oder 2, **dadurch gekennzeichnet, daß** die Kapillare innen desaktiviert ist.

4. Verfahren nach einem der Ansprüche 1 bis 3, **dadurch gekennzeichnet, daß** als Nachweisgerät (8) ein Ionendriftspektrometer benutzt wird.

5. Verfahren nach einem der Ansprüche 1 bis 3, **dadurch gekennzeichnet, daß** als Nachweisgerät (8) ein Gaschromatograph benutzt wird.

6. Verfahren nach einem der Ansprüche 1 bis 3, **dadurch gekennzeichnet, daß** als Nachweisgerät (8) ein Massenspektrometer benutzt wird.

7. Vorrichtung zum analytischen Nachweis von Spuren bestehend aus:
a) einer Probe (11), deren Oberfläche untersucht wird,
b) einer Kapillaren (1), wobei die Probe (11) und ein Ende der Kapillare (1) relativ zueinander justierbar sind,
c) einer Lichtquelle (4) zum Bestrahlen der Probe (11), wobei der Lichtstrahl (9) der Lichtquelle (4) relativ zur Probe (11) und zur Kapillaren (1) justierbar ist und wobei der Durchmesser der Kapillaren (1) mindestens dreimal so groß ist, wie der Durchmesser des Lichtflecks mit dem die Probe (11) bestrahlt wird und
d) einem Nachweisgerät (8)
**gekennzeichnet durch**
e) eine Desorptionskammer (7) mit einer Aufnahme für die Probe, mit einem Fenster (12) für den Lichtstrahl (9), einen Gaseinlass (13) sowie einer Kapillardurchführung (10), wobei in der Desorptionskammer ein Innenüberdruck vorhanden ist.

8. Vorrichtung nach Anspruch 7 **gekennzeichnet durch** eine heizbare Kapillare (1)

9. Vorrichtung nach Anspruch 7 oder 8 **dadurch gekennzeichnet, daß** die innere Oberfläche der Kapillaren (1) desaktiviertes Glas oder Quarz ist.

10. Vorrichtung nach einem der Ansprüche 7 bis 9, **gekennzeichnet durch** eine Desorptionskammer (7) bestehend aus
a) einem Oberteil mit der Kapillardurchführung (10), dem Fenster (12), sowie dem Gaseinlaß (13) und
b) einem Unterteil, welches gegen das Oberteil verschiebbar ist.

11. Vorrichtung nach Anspruch 10, **dadurch gekennzeichnet, daß** das Unterteil ein Probenschlitten (14) ist, der gegen eine Schlittenführung (15) im Oberteil zweidimensional verschiebbar ist.

## Claims

1. Process for the analytical detection of trace substances, consisting of the following process steps:
a) Irradiation of part of a sample surface with light to detach the trace substances to be detected, the light power density ranging from 1 to 100 MW/cm²,
b) taking up and transferring the detached organic compounds by means of a capillary, the capillary diameter being at least three times as large as the diameter of the irradiated part, and
c) feeding of the gas flow through the capillary to the inlet of a detection device (8) and detection in the detection device (8),
**characterized by**
d) the sample surface being located in a desorption chamber (7),
e) the capillary opening out into the desorption chamber, with an internal volume pressure prevailing in the desorption chamber, as a result of which the detached organic compounds are transported as a gas flow through the capillary to the detection device.

2. Process according to Claim 1, **characterized by** the capillary used being a heatable capillary.

3. Process according to Claim 1 or 2, **characterized by** the capillary being deactivated inside.

4. Process according to one of Claims 1 through 3, **characterized by** the detection device (8) being an ion drift spectrometer.

5. Process according to one of Claims 1 through 3, **characterized by** the detection device (8) being a gas chromatograph.

6. Process according to one of Claims 1 through 3, **characterized by** the detection device (8) being a mass spectrometer.

7. System for the analytical detection of trace substances, consisting of:
a) A sample (11), the surface of which is investigated,
b) a capillary (1), with the sample (11) and one end of the capillary (1) being adjustable relative to each other,
c) a light source (4) to irradiate the sample (11), with the light beam (9) of the light source (4) being adjustable relative to the sample (11) and the capillary (1) and with the diameter of the capillary (1) being at least three times as large as the diameter of the light spot with which the sample (11) is irradiated, and
d) a detection device (8),
**characterized by**
e) a desorption chamber (7) with a unit for taking up the sample, a window (12) for the light beam (9), a gas inlet (3), and a capillary feedthrough (10) and with an internal overpressure prevailing in the desorption chamber.

8. System according to Claim 7, **characterized by** the use of a heatable capillary (1).

9. System according to Claim 7 or 8, **characterized by** the inner surface of the capillary (1) being deactivated glass or quartz.

10. System according to one of Claims 7 through 9, **characterized by** a desorption chamber (7), consisting of
a) an upper part with the capillary feedthrough (10), the window (12), and the gas inlet (3), and
b) a lower part that can be shifted relative to the upper part.

11. System according to Claim 10, **characterized by** the lower part being a sample slide (14) that can be shifted two-dimensionally relative to the slide guiding unit (15) in the upper part.

## Revendications

1. Procédé de détection analytique de traces par les procédés suivants :
a) Irradiation par la lumière d'une partie de la surface de l'échantillon afin d'écailler les traces à détecter, la densité du flux lumineux se situant entre 1 et 100 MW/cm².
b) Prélèvement et transmission des composés organiques avec un capillaire, le diamètre du capillaire étant au moins trois fois plus gros que le diamètre de la partie irradiée et
c) Conduite du flux de gaz circulant dans le capillaire vers l'entrée de l'appareil de détection (8) et détection par l'appareil de détection
**caractérisé en ce que**
d) la surface de l'échantillon se trouve dans une chambre de désorption,
e) le capillaire sort de la chambre de désorption, une pression intérieure dans la chambre de désorption étant appliquée, par quoi les composés organiques prélevés sont transportés sous forme de flux de gaz dans le capillaire vers l'appareil de détection.

2. Procédé conforme à la revendication 1, **caractérisé en ce que** le capillaire utilisé est un capillaire pouvant être chauffé.

3. Procédé conforme à la revendication 1 ou 2, **caractérisé en ce que** le capillaire est désactivé à l'intérieur.

4. Procédé conforme à la revendication 1 à 3, **caractérisé en ce que** l'appareil de détection (8) utilisé est un spectromètre à dérive ionique.

5. Procédé conforme à la revendication 1 à 3, **caractérisé en ce que** l'appareil de détection (8) utilisé est un chromatographe pour phase gazeuse.

6. Procédé conforme à la revendication 1 à 3, **caractérisé en ce que** l'appareil de détection (8) utilisé est un spectromètre de masse.

7. Dispositif de détection analytique de traces étant constitué par :
a) un échantillon (11) dont la surface est à analyser,
b) un capillaire (1), l'échantillon (11) et l'extrémité du capillaire (1) étant l'un par rapport à l'autre ajustable,
c) une source de lumière (4) pour irradier l'échantillon, le rayon lumineux (9) de la source de lumière (4) étant ajustable par rapport à l'échantillon (11) et au capillaire (1) et le diamètre du capillaire étant au moins trois fois plus gros que le diamètre du spot lumineux avec lequel l'échantillon (11) est irradié et
d) un appareil de détection (8)
**caractérisé par**
e) une chambre de désorption (7) avec un prélèvement de l'échantillon, avec une fenêtre (12) pour le rayon lumineux (9), avec une entrée de gaz (13) ainsi qu'avec un conduit de capillaire (10), une pression intérieure dans la chambre de désorption étant appliquée.

8. Dispositif conforme à la revendication 7, **caractérisé par** un capillaire (1) pouvant être chauffé.

9. Dispositif conforme à la revendication 7 ou 8, **caractérisé en ce que** la surface intérieure du capillaire est faite en verre ou quartz désactivé.

10. Dispositif conforme à la revendication 7 à 9, **caractérisé par** une chambre de désorption (7) constituée par :
a) une partie supérieure avec un conduit de capillaire (10), une fenêtre (12) ainsi qu'une entrée de gaz (13) et
b) une partie inférieure pouvant coulisser contre la partie supérieure.

11. Dispositif conforme à la revendication 10, **caractérisé par** la partie inférieure, un chariot d'échantillonnage (14), pouvant coulisser de façon bidimensionnelle contre une glissière du chariot (15) de la partie supérieure.
